# EUROPEAN PATENT SPECIFICATION

(11) **EP 4 628 185 B1**
(45) Date of publication and mention of the grant of the patent: **27.05.2026**
(21) Application number: 24168606.2
(22) Date of filing: 05.04.2024
(51) Int. Cl.: B01D 27/00, B01D 29/01, B01D 29/11

(54) **FILTRATION UNIT AND METHOD OF MANUFACTURING A FILTRATION UNIT**
FILTRATIONSEINHEIT UND VERFAHREN ZUR HERSTELLUNG EINER FILTRATIONSEINHEIT
UNITÉ DE FILTRATION ET PROCÉDÉ DE FABRICATION D'UNE UNITÉ DE FILTRATION

(43) Date of publication of application: 08.10.2025
(73) Proprietor: Sartorius Stedim Biotech GmbH, 37079 Göttingen (DE)
(72) Inventor: Schäfer, Christian, 37079 Göttingen (DE); Leetsch, Roland, 37079 Göttingen (DE); Schultz, Michael, 37079 Göttingen (DE)
(74) Representative: Novagraaf International SA

(56) References cited:
- EP-A2- 0 995 535
- WO-A1-00/13763
- AU-A1- 2017 266 714
- CN-A- 101 274 162

## Description

The present disclosure relates to a filtration unit and method of manufacturing a filtration unit.

For manufacturing of filtration modules, in particular for a syringe attachment filter or syringe filter holder, comprising a plastic housing, the housing components and the filter element are attached by welding and/or injection molding.

However, common welding methods for manufacturing of filtration units require multiple process steps for attachment of the filter element and coupling of the housing components.

Common injection molding methods for manufacturing of filtration units may comprise less process steps but bear the risk of insufficient attachment or damaging of the filter element.

WO 00/13763 discloses a transmission filter comprising a laser welded housing and filter media affixed within the housing via crimping. AU 2017 266 714 A1, EP 0 995 535 A2 and CN 101 274 162 A are other relevant prior art documents.

Also, the filtration units manufactured by common welding and/or injection molding may lack fluid tightness at high operating pressure due to insufficient attachment of the filter element.

It is therefore an object of the present invention to provide a filtration unit with improved fluid tightness and filter element attachment as well as an improved method of manufacturing a respective filtration unit.

### Summary of the Invention

One aspect of the present invention relates to a filtration unit, in particular a syringe attachment filter or syringe filter holder, for filtering of a fluid, the filtration unit be filtered; a second housing part comprising at least one second fluid chamber for a filtered fluid; a filter element configured to fluidly connect the first fluid chamber and the second fluid chamber and to filter the fluid to be filtered; wherein the second housing part comprises: a support surface for supporting a fringe area or outer part of the filter element; and a rib element protruding from the support surface, at least a distal portion of the rib element consisting of or comprising a material substantially fusible by welding; wherein the first housing part comprises: an abutting surface for substantially abutting with the distal portion of the rib element the abutting surface at least partly facing the support surface of the second housing part; and a barrier element protruding from the abutting surface towards the support surface and positioned relative to the rib element so as to laterally and/or medially enclose an inner melt cavity therebetween, wherein the inner melt cavity upon welding is at least partially filled with solidified melt originating from fused and/or melted material of the distal portion of the rib element, wherein the first housing part and the filter element and, optionally, the second housing part are to be coupled to one another via the solidified melt in the inner melt cavity.

The filtration unit is advantageous because the housing parts and the filter element may be joined in one process step. Also, it may be manufactured with a short welding time and with an improved bonding of the components. In particular, the filtration unit may be manufactured using laser beam welding, wherein the filter element of the filtration unit is subject to reduced mechanical stress during and after manufacturing, in particular compared to conventional sealing processes such as thermal sealing or ultrasonic welding. Furthermore, the filtration unit comprises an improved leak tightness and/or impermeability. Also, the filtration unit is configured for bi-directional use because the loading capability of the filter element is increased in both fluid flow directions.

The first housing part and the second housing part may form at least a part of a housing of the filtration unit. The first housing part and/or the second housing part may comprise or consist of meltable and/or fusible polymer, in particular thermoplast, such as Polyamide (PA), Polyethylene (PE), Polypropylene (PP), Polystyrene (PS), Polyvinyl chloride (PVC), Polycarbonate (PC), Polymethylmethacrylate (PMMA), Acrylonitrile butadiene styrene (ABS), e.g., Methyl methacrylate acrylonitrile butadiene styrene (M-ABS), Acrylonitrile styrene acrylate (ASA) and/or Styrene acrylonitrile resin (SAN).

Fusible and/or meltable describes the property of a material to transition from a substantially solid state to a substantially (semi-)liquid and/or flowable state.

Fusing and/or melting of at least a part of the material of the rib element may be achieved by friction heat, as, e.g., occurring during ultrasonic welding, and/or by absorption of radiation, as, e.g., occurring during laser beam welding.

The distal portion of the rib element may comprise a contact surface, which abuts against the abutting surface of the first housing part. Optionally, two or more of the abutting surface, the support surface and the contact surface are at least partly oriented substantially parallel to one another.

The inner melt cavity may be configured to receive a fused and/or melted material of the distal portion of the rib element and/or fused and/or melted material of the abutting surface. The first housing part and the filter element and, optionally, the second housing part may be bonded and/or attached to one another by the fused material when cooled and/or solidified, i.e., by the solidified melt thereof.

Preferably, the inner melt cavity is substantially completely filled with the solidified melt so that the contact area between the solidified melt and the first and second housing parts is increased to achieve an improved bonding.

At least the distal portion of the rib element may consist of or comprise a material substantially fusible by laser beam welding. This is advantageous because less mechanical stress is induced to the components of the filtration unit, in particular compared to ultrasonic welding. Attachment and/or bonding by laser beam welding allows increased design freedom, in particular with respect to the filter element support, and/or reduces damage of the filter element during manufacturing of the filtration unit, in particular of the filter element.

Also, laser beam welding is preferred because by using ultrasonic welding for fusing the rib element, particles and/or residue may accumulate on the filter element, which reduces filtration capacity of the filtration unit and/or which may be flushed into the filtrate thereby polluting the filtrate.

The second housing part may at least partly consist of or comprise a material, which at least partly absorbs laser beams so that it heats up when applying laser beam irradiation so that it may be fused and/or melted.

Preferably, the first housing part consists of a material substantially transparent and/or permeable for the laser beams used for laser beam welding and/or fusing of at least the distal portion of the rib element. This is advantageous because it allows increased freedom for laser beam orientation and/or positioning of the components of the filtration units and the laser beam welding device during the fusing process.

The first housing part and the second housing part may consist of or comprise the same polymer material, wherein the material of the second housing additionally comprises an absorber for absorbing at least a part of the laser beams. This is advantageous because bonding of substantially identical or similar materials is easier and/or achievable in a more reliable manner compared to more diverse materials. However, the first housing part and the second housing part may consist of or comprise different material, in particular different polymers.

Preferably, the first housing part and the second housing part consist of or comprise materials with a similar fusion temperature and/or melting point. This is advantageous because the material forming the abutting surface of the first housing part and the material forming the distal portion of the rib element may fuse and/or melt substantially simultaneously, whereby an improved bonding between the first and second housing parts may be obtained.

Preferably, the barrier element substantially separates the first fluid chamber from the inner melt cavity so that fluid within the first fluid chamber may not enter the inner melt cavity. This way, a dead volume of the filtration unit may be reduced.

The filter element may be a filter membrane. The filter membrane may be supported at a lateral area and/or a fringe portion by the support surface of the second housing part. A filter membrane is advantageous as it provides a cost-efficient and effective filter element. Also, a filter membrane provides a large filter surface in a flat format.

The barrier element may be configured to substantially block the fused material and/or to substantially prohibit the fused material from flowing past the barrier element towards a central or inner part of the filter unit. A respective barrier element is beneficial as it keeps the fused material contained so that it may not flow to a filter surface of the filter element and reduces filter capacity of the filtration unit.

A vertex of the barrier element may be in and/or come into contact with the filter element. Specifically, the filter element may be clamped between the barrier element and the support surface so that the filter element is held in place during and/or after solidification of the fused material. However, it is preferred that no or only minor forces are acting on the filter element from the barrier element so that the filter element is not damaged.

Alternatively or in addition, a vacuum and/or negative pressure may be applied to the second fluid chamber of the second housing part during the fusing process, thereby pressing the filter element against the support surface of the second housing part to substantially keep the filter element in place and/or avoid movement of the filter element during the fusing process.

The inner melt cavity may substantially be formed and/or defined by the rib element, the abutting surface, the barrier element and the support surface and/or the filter element.

Preferably, the inner melt cavity may be defined by the volume enclosed by a medial surface of the rib element, a medial area of the abutting surface, a lateral surface of the barrier element and a lateral area of the support surface and/or a fringe area or outer part of the filter element.

A part of the filter element, for example a fringe area of a filter membrane, may define at least a part of the lower side of the inner melt cavity.

Accordingly, a fringe area of the filter element may be coupled to the first housing part and/or the second housing part via the solidified melt originating from the fused material being present in the inner melt cavity. This way, the filter element is advantageously bonded to the first housing part and/or the second housing part with little induced mechanical stress to the filter element. In addition, the bonding of the filter element is achieved in the same process step as bonding the first and second housing parts to one another, which, e.g., reduces manufacturing time.

The barrier element may be circumferentially provided at a lateral area of the first housing part. The barrier element may comprise or be a wall, which separates a portion of the first housing part defining the first fluid chamber from a portion of the first housing part defining the inner melt cavity.

The barrier element may comprise a substantially circular and/or round or polygonal shape. The barrier element may form part of an outer border of the first fluid chamber and/or an inner border of the inner melt cavity.

The barrier element may be positioned medially to the abutting surface.

The rib element may be circumferentially provided at a lateral area of the second housing part, preferably at a position further lateral than the barrier element. The rib element may comprise or be a wall, which may form an outer border of the inner melt cavity.

The rib element may provide a fitting for the filter element. The rib element may comprise a substantially circular and/or round or polygonal shape.

The rib element may be positioned laterally to the support surface.

Preferably, the rib element and the barrier element have a substantially identical shape and/or are concentric. This is advantageous because the distance between the rib element and the barrier element is constant in such a case.

A lateral surface of the barrier element may face a medial surface of the rib element. Preferably, the lateral surface of the barrier element and the medial surface of the rib element are at least partly opposing one another.

A distance between the lateral surface of the barrier element and the medial surface of the rib element, i.e., the width of the inner melt cavity, may be approximately 0.5 mm to approximately 3 mm, preferably approximately 0.7 mm to approximately 1 mm.

The distance between the barrier element and the rib element is preferably substantially constant throughout the filtration unit.

The distance between the barrier element and the rib element is one factor defining the volume of the inner melt cavity.

A distance between the abutting surface of the first housing part and the support surface of the second housing part and/or the filter element, i.e., the height of the inner melt cavity, may be approximately 0.3 mm to approximately 0.8 mm, preferably approximately 0.4 to approximately 0.5 mm.

The distance between the abutting surface and the support surface is preferably substantially constant throughout the filtration unit.

The distance between the abutting surface and the support surface and/or the filter element is another factor defining the volume of the inner melt cavity.

Both distances may be considered in the design of the filtration unit. In particular, the inner melt cavity is advantageously designed so that a majority of the fused material originating from the distal portion of the rib element may be received by the inner melt cavity.

For example, a volume of the inner melt cavity may be approximately 20 mm³ to approximately 50 mm³, preferably approximately 30 mm³ to approximately 40 mm³.

The first housing part may comprise at least one first fluid port in fluid connection with the first fluid chamber for receiving the fluid to be filtered.

Preferably, the first fluid port is positioned substantially centrally with respect to the first fluid chamber.

The first fluid port may be particularly configured to be coupled with a pipe or a tube and/or an outlet port of a syringe for receiving a fluid to be filtered.

The second housing part may comprise at least one second fluid port in fluid connection with the second fluid chamber for discharging the filtered fluid.

Preferably, the second fluid port is positioned substantially centrally with respect to the second fluid chamber.

The first and second fluid ports may be positioned on substantially opposite sides of a central area of the filter element. This way, an efficient passage of the fluid may be obtained.

The second fluid port may be particularly configured to be coupled with a pipe or a tube or be configured as outlet for dispensing the filtered fluid.

Preferably, the filter element being a membrane is oriented substantially orthogonal to an imaginary line between the first fluid port and the second fluid port. This is advantageous in order to obtain a high flow capacity through the filter element.

The first housing part may comprise at least one ridge element protruding from the abutting surface and positioned laterally to the rib element.

At least one crevice may be formed between a medial surface of the ridge element and a lateral surface of the rib element. Said crevice may serve as an outer melt cavity.

The outer melt cavity may be at least partially filled with the solidified melt originating from fused material of the distal portion of the rib element.

The ridge element may form a lateral frame and/or rim of the first housing part and/or may form a part of a socket for receiving and/or fitting of the second housing part. The ridge element and the rib element preferably provide a smooth interlocking and/or a form fit in the lateral and/or medial direction.

A distance between a medial surface of the ridge element and a lateral surface of the rib element may be approximately 0.05 mm to approximately 1 mm, preferably approximately 0.1 mm to approximately 0.4 mm. The distance between the medial surface of the ridge element and the lateral surface of the rib element substantially defines the width of the outer melt cavity.

The volume of the inner melt cavity may be larger than the outer melt cavity in order to receive more of the fused material than the outer cavity. Preferably, the major share of the fused material of the rib element flows into the inner melt cavity and/or the outer melt cavity is provided in order to receive an excess of fused material.

A further aspect of the present invention relates to a method of manufacturing a filtration unit, in particular a syringe attachment filter or syringe filter holder, the filtration unit comprising a first housing part, a second housing part and a filter element supported by the second housing part, wherein the second housing part comprises at least one rib element wherein at least a distal portion of the rib element comprising or consist of a material fusible by welding; wherein the first housing part comprises at least one abutting surface for abutting with a contact surface of the distal portion of the rib element; the method comprising the steps of: arranging the first housing part and the second housing part so that the distal portion of the rib element of the second housing part substantially abuts against the abutting surface of the first housing part; and simultaneously pressing the second housing part and the first housing part together and at least partly fusing the distal portion of the rib element.

In particular, fusing and/or melting of at least a part of the distal portion of the rib element may be achieved for example by ultrasonic welding or laser beam welding.

The method may further comprise the step of placing the filter element in a fitting provided by the second housing part.

Relative movement between the first housing part and the second housing part towards each other may be achieved by pressing the housing parts against one another during the fusing process. This leads to pressing of a contact surface of the distal portion of the rib element against the abutting surface so that the fused material of the distal portion of the rib element is caused to flow towards lateral sides of the rib element. The height of the rib element gradually shrinks during the fusing process and fused material accumulates in one or more melt cavities formed between the first housing part and the second housing part and/or the filter element (e.g., an inner melt cavity and, optionally, an outer melt cavity).

Preferably, at least the distal portion of the rib element consists of or comprises a material substantially fusible by laser beam welding; and wherein fusing the distal portion of the rib element includes applying a laser beam irradiation, thereby fusing at least a part of the distal portion of the rib element. Laser beam welding is advantageous because less mechanical stress is induced to the components of the filtration unit, in particular compared to ultrasonic welding, which, e.g., allows increased design freedom and/or reduces damages during manufacturing of the filtration unit, in particular to the filter element. The second housing part, in particular the distal portion of the rib element, may comprise or consist of a material that at least partly absorbs laser beams so that it heats up when applying laser beam irradiation until a fusing temperature is reached and the material is fused and/or melted.

Optionally, the first housing part comprises or consists of a material substantially transparent and/or permeable for the laser beams and the laser beams substantially propagate through at least a part of the first housing part without substantial loss of energy before reaching the rib element and being at least partly absorbed by it. This is advantageous as it allows greater design freedom of the manufacturing device(s) and method(s). For example, the laser beam welding device may be positioned so that the first housing part is positioned between the laser beam welding device and the second housing part.

Accordingly, the laser beam may be directed so as to propagate through the first housing part and subsequently reaches the distal portion of the rib element, more specifically the contact surface being in contact with the abutting surface of the first housing part. This way, the energy of the laser beam may efficiently fuse the distal portion of the rib element.

Preferably, the focal plane of the laser beam may be approximately congruent and/or coincident to the contact surface of the distal portion of the rib element while applying the laser irradiation to the distal portion of the rib element. This way, the laser beam may heat the distal portion of the rib element substantially uniformly and/or over its full circumference and/or at the same height level.

Further preferred, the focal plane of the laser beam may be at approximately the same level as the contact surface of the rib element so that the contact surface receives the highest amount of energy by the laser beam and, consequently, fuses before other parts of the distal portion of the rib element.

The components of the filtration unit and the laser beam welding device may be provided in a way that the second housing part is moved towards the first housing part and/or the focal plane of the laser beam while applying the laser irradiation. In other words, the first housing part may be substantially held in place and the focal plane of the laser beam remains unchanged during the application of laser irradiation while the second housing part is pressed against the first housing part in a direction opposite to the laser beam propagation direction and approaches the first housing part in the process of gradually fusing a part of the rib element. By doing so, the focal plane of the laser beam remains substantially static with respect to the first housing part.

As explained above, due to the fusing material of the distal portion of the rib element being displaced upon the contact pressure at the abutting surface, the second housing part may be moved towards the first housing part. Due to said relative movement, a part of the distal portion of the rib element being substantially solid and/or unfused is continuously moved towards the abutting surface and to the focal plane of the laser beam. Thus, solid and/or unfused material is constantly fed to the focal plane of the laser beam so that a continuous fusing of the distal portion of the rib element may be obtained.

This provides the advantage that neither the laser beam welding device is to be moved nor the focal plane of the laser beam is to be adapted over the course of the fusing process while still maintaining an efficient fusing of the material due to optimal positioning of the focal plane of the laser beam with respect to the material to be fused.

As an alternative to the above, the first housing part and/or the focal plane of the laser beam may be moved towards the second housing part while applying the laser irradiation in such a way that the focal plane is substantially levelled with the contact surface of the distal portion of the rib element. In this case, the second housing part is substantially stationary.

The fusing process is preferably stopped when a predefined and/or predefinable part of the distal portion of the rib element has been fused and/or a predefined and/or predefinable relative position between the first housing part and the second housing part is obtained.

In order to avoid fused material to flow beneath the filter element and improve attachment of the filter element to the first and/or second housing part, negative pressure may be applied to a second fluid chamber of the second housing part during the fusing process, thereby pressing the filter element against a support surface of the second housing part.

The present invention is further explained in detail by the following detailed description and the appended drawings, in which particular embodiments are illustrated by way of example, wherein the present invention is in no way limited by these particular embodiments.

### Brief description of the drawings

- Fig. 1: shows an exemplary filtration unit;
- Fig. 2: shows a cross-sectional view of the exemplary filtration unit of figure 1;
- Fig. 3: shows an enlarged view of a part of the exemplary filtration unit of figures 1 and 2;
- Fig. 4: shows an enlarged view of the part shown in figure 3 before fusion of a part of the distal portion of the rib element;
- Fig. 5: shows an exemplary method of manufacturing a filtration unit.

### Description of particular embodiments

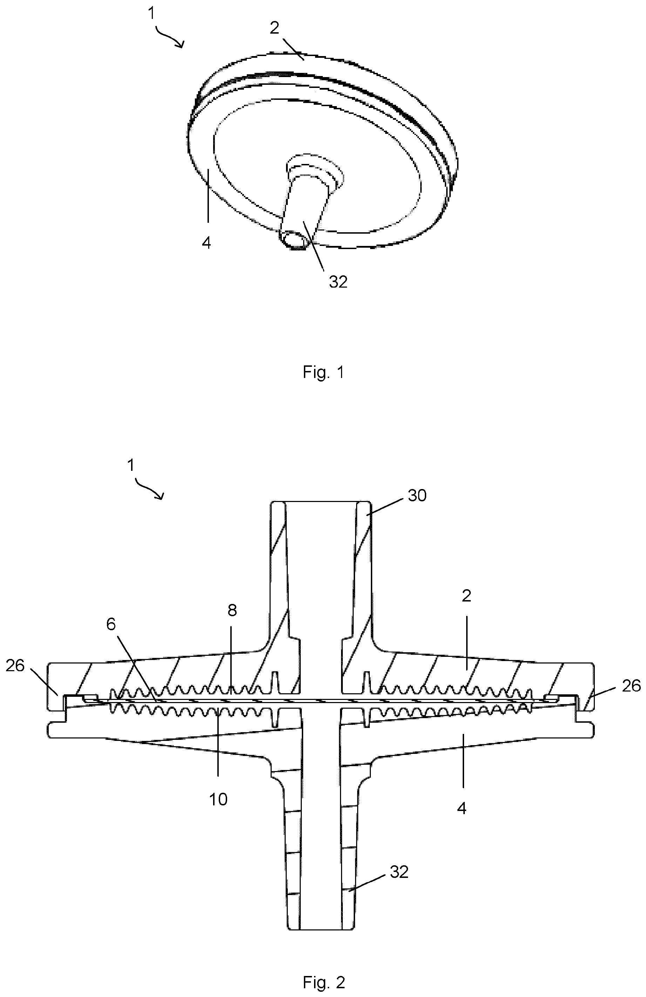

**Fig. 1** shows an exemplary filtration unit 1 comprising a first housing part 2 and a second housing part 4, which are coupled and/or attached and/or to one another substantially fluid tightly.

The filtration unit 1 comprises at least one first fluid port 30 for receiving a fluid to be filtered, for example from a pipe or a syringe. The filtration unit 1 further comprises at least one second fluid port 32 for dispensing a filtered fluid.

The first housing part 2 comprises a first fluid chamber 8 fluidly coupled with the first fluid port 30. The second housing part 4 comprises a second fluid chamber 10 fluidly coupled with the second fluid port 32.

The shown first housing part 2 and the second housing part 4 have a round and/or circular outline. However, the first housing part 2 and the second housing part 4 may have a different shape, such as polygonal.

In the shown filtration unit 1, the first housing part 2 and the second housing part 4 comprise a substantially flat configuration, i.e., a diameter substantially larger than a height. However, one or both housing parts 2, 4 may have a different shape. For example, one or both housing parts 2, 4 may have a larger height, which allows for housing of a larger fluid chamber 8, 10.

For filtering the fluid to be filtered, in particular for removing particles from said fluid, the filtration unit 1 comprises at least one filter element 6, which is positioned such that the fluid is forced to permeate through said filter element 6 when flowing from the first fluid port 30 to the second fluid port 32.

**Fig. 2** shows a cross-sectional view of the exemplary filtration unit 1 of figure 1.

In the exemplary filtration unit 1, the filter element 6 is a filter membrane, which is positioned substantially centrally in the filtration unit 1. The filter membrane 6 may be between approximately 0.1 mm and 1 mm in height.

The filter membrane 6 substantially separates the first fluid chamber 8 from the second fluid chamber 10.

The filter surface of the filter element 6 may be oriented substantially orthogonally with respect to an imaginary line connecting the first fluid port 30 and the second fluid port 32. The fluid to be filtered is advantageously distributed over the entire filter surface facing the first fluid chamber 8 and permeates through the filter element 6 into the second fluid chamber 10, wherein particles remain in the first fluid chamber 8 and/or are caught by the filter element 6.

In the shown example, the filter element 6 is coupled to one or both of the filter housing parts 2, 4 on its lateral sides and/or fringe areas and/or outer areas. Preferably, the filter element 6 is coupled to the housing parts 2, 4 along its entire circumference.

For example, the second housing part 4 comprises a support surface 18, which supports the filter element 6. In the shown exemplary filtration unit 1, the filter element 6 being a filter membrane rests with its outer part and/or fringe area on the support surface 18.

The first housing part 2 and the second housing part 4 may have portions and/or elements, which provide a tongue and groove joint between the housing parts 2, 4.

As shown in figure 2, the first housing part 2 comprises a ridge element 26 protruding towards the second housing part 4. The ridge element 26 preferably forms a frame or rim extending over the entire circumference at a fringe area or outer part of the first housing part 2. The second housing part 4 comprises a rib element 12 protruding towards the first housing part 2. The rib element 12 preferably extends over the entire circumference of the second housing part 4 and/or comprises a form substantially complementary to the ridge element 26 of the first housing part 2. The ridge element 26 and the rib element 12 substantially prohibit or at least restrict relative lateral and/or medial movement between the housing parts 2, 4.

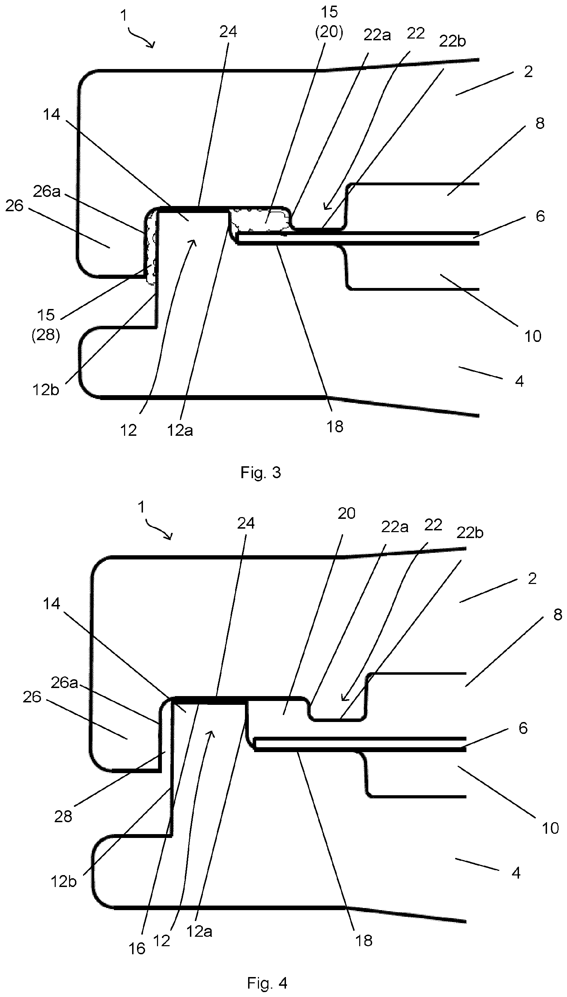

The first housing part 2 and the second housing part 4 are additionally attached and/or bonded to one another at a fringe area or outer part, which is shown in more detail in figure 3 and described below.

**Fig. 3** shows an enlarged view of a fringe area or outer part of the exemplary filtration unit 1 of figures 1 and 2.

In particular, figure 3 shows the coupling and/or bonding between the first housing part 2 and the second housing part 4 through solidified melt 15 originating from fused and/or melted material. For this, the first housing part 2 and/or the second housing part 4 are to comprise or consist of a fusible and/or meltable material, preferably thermoplastic.

As an example, the solidified melt 15 may originate from a distal portion 14 of the rib element 12 of the second housing part 4, which has been at least partly fused and/or melted and which fused material flowed into empty cavities formed between the first housing part 2 and the second housing part 4.

Specifically, an inner melt cavity 20 is formed between the rib element 12 of the second housing part 4 and a barrier element 22 of the first housing part 2, wherein the barrier element 22 protrudes towards the second housing part 4. The inner melt cavity 20 is substantially defined by a medial or inner surface 12a of the rib element 12, an abutting surface 24 against which a distal portion 14 of the rib element 12 abuts, a lateral or outer surface 22a of the barrier element 22 and the filter membrane 6 and/or the support surface 18 supporting the filter membrane 6.

The coupling between the first housing part 2 and the filter membrane 6 and, optionally, the second housing part 4 is preferably substantially leak tight so that no fluid from inside the filtration unit 1 may escape through a leak between the housing parts 2, 4 and/or the filter membrane 6. This may in particular be achieved by the distal portion 14 of the rib element 12 abutting against the abutting surface 24 and additionally by the solidified melt 15 acting as seal between the rib element 12 and the abutting surface 24, additionally forming an adhesive bond.

Preferably, after solidification of the fused material forming the solidified melt 15, the inner melt cavity 20 is substantially leak tight so that substantially no fluid inside the first and/or second fluid chamber 8, 10 may enter the inner melt cavity 20. This may, e.g., be achieved by the barrier element 22 abutting with its vertex 22b upon the support surface 18 and/or the filter membrane 6 to form a substantially fluid tight seal towards the first fluid chamber 8 and/or the second fluid chamber 10. Alternatively or in addition, the solidified melt 15 may fill a potential void or distance between the barrier element 22 and the support surface 18 and/or the filter membrane 6.

The solidified melt 15 in the inner melt cavity 20 at least bonds the filter membrane 6 to the first housing part 2. In particular, the filter membrane 6 is bonded and/or attached to the first housing part 2, and, optionally, to the second housing part 4, so that the filter membrane 6 may reliably withstand pressure exerted from the fluid to be filtered in the first fluid chamber 8 onto the filter membrane 6.

For example, the filter membrane 6 may be partially positioned within the inner melt cavity 20 or define a lower part thereof so that the fused material of the distal portion 14 of the rib element 12 comes into contact with the filter membrane 6 and, upon solidification, bonds the filter membrane 6 to the first housing part 2, and, optionally,/or to the second housing part 4. This way, the filter membrane 6 may be securely positioned and bonded inside the filtration unit 1. In particular, a respective bonding requires no additional processing step during manufacturing of the filtration unit 1 for separately bonding the filter membrane 6 to the first housing part 2 and/or second housing part 4.

Optionally, a large portion of the inner melt cavity 20 may be filled with the solidified melt 15 in order to obtain an additional adhesive bond between the first and second housing parts 2, 4 and to superiorly prohibit separation and/or withstand internal forces, in particular caused by the fluid inside the filtration unit 1, and external forces, in particular caused during coupling of the filtration unit 1 with a syringe.

The filter membrane 6 may be clamped and/or pinched by the barrier element 22. However, the filter membrane 6 should be subject to, if at all, only little clamping force in order to avoid damaging of the filter membrane 6.

A second melt cavity may be provided. In the shown example, the fused material of the distal portion 14 of the rib element 12 may flow into an outer melt cavity 28, which is formed by a gap between a lateral or outer surface 12b of the rib element 12 and the medial or inner surface 26a of the ridge element 26.

Preferably, the width of the outer melt cavity 28 is small so that a majority of the melted material is guided and/or forced to the inner melt cavity 20. Alternatively or in addition, a sloped surface may be provided at the distal portion 14 of the rib element 12 so as to guide the melted material towards the inner melt cavity 20.

Even though it is preferred that the majority of fused material flows into the inner melt cavity 20, the outer melt cavity 28 serves for additionally bonding the housing parts 2, 4 and/or for receiving fused material when the inner melt cavity 20 is substantially fully filled with fused material. This may, e.g., be achieved by flow guides at the rib element 12, which are configured to guide the fused material to the inner melt cavity 20. An example of flow guides may be cuts in the distal portion 14 of the rib element 12, wherein the cuts provide a slope descending to the medial surface 12a of the rib element 12.

The inner melt cavity 20 and the outer melt cavity 28 may have the same volume or one of the cavities may be larger than the other. Preferably, the inner melt cavity 20 is substantially bigger than the outer melt cavity 28.

In particular, the inner melt cavity 20 may comprise a volume to be filled by fused material that approximately equals or is slightly smaller than the volume of the fused material.

For example, the volume of the inner melt cavity may be approximately 20 mm³ to approximately 50 mm³, preferably approximately 30 mm³ to approximately 40 mm³.

A distance between the lateral surface 22a of the barrier element 22 and the medial surface 12a of the rib element 12, i.e., the width of the inner melt cavity 20, may be approximately 0.5 mm to approximately 3 mm, preferably approximately 0.7 mm to approximately 1 mm.

A radius of the medial surface 12a of the rib element may be between approximately 7 mm and approximately 22 mm, in particular between approximately 11 mm and approximately 16 mm. A width of the rib element 12, in particular of the distal portion 14 of the rib element 12, may be between approximately 0.5 mm and approximately 3 mm, in particular between approximately 0.8 mm and approximately 1.5 mm.

The height of the rib element 12 measured from the support surface 18, i.e., a distance between the abutting surface 24 of the first housing part 2 and the support surface 18 of the second housing part 4, may be approximately 0.3 mm to approximately 1.5 mm, preferably approximately 0.4 to approximately 0.8 mm. This measure substantially defines the height of the inner melt cavity 20 and may be designed according to particular needs, specifically considering the volume of the fused material and/or the solidified melt 15.

An outer radius of the first housing part 2 and/or the second housing part 4, in particular of the ridge element 26, may be between approximately 10 mm and approximately 30 mm, in particular between approximately 15 mm and approximately 20 mm.

The radius of the medial surface 26a of the ridge element 26 and/or of the lateral surface 12b of the rib element 12 may be between approximately 8 mm and approximately 25 mm, in particular between approximately 12 mm and approximately 18 mm.

A distance between a medial surface 26a of the ridge element 26 and a lateral surface 12b of the rib element 12, i.e., a difference between the radius of the medial surface 26a of the ridge element 26 and the lateral surface 12b of the rib element 12, may be approximately 0.05 mm to approximately 3 mm, preferably approximately 0.1 mm to approximately 0.4 mm. Said gap substantially defines the width of the outer melt cavity 28 and may be designed according to particular needs, specifically considering a difference in volume between the fused material and the inner melt cavity 20. Also, the height of the ridge element 26 measured from the abutting surface 24 may be selected appropriately in order to be able to receive and hold a sufficient amount of fused material so that preferably no fused material flows out of the outer melt cavity 28.

In one particular example, the radius of the medial surface 26a of the ridge element 26 is approximately 15.5 mm, the radius of the lateral surface 12b of the rib element 12 is approximately 15.4 mm, the radius of the medial surface 12a of the rib element 12 is approximately 14.35 mm, the radius of the lateral surface 22a of the barrier element 22 is approximately 13.5 mm and the height of the rib element 12 measured from the contact point with the support surface 18 to the abutting surface 24 is approximately 0.5 mm. Accordingly, the volume of the inner melt cavity 20 in this particular example is approximately 37 mm³. Furthermore, in this particular example, the filter membrane 6 has a height of approximately 0.14 mm and the vertex 22b of the barrier element 22 has a height measured from the abutting surface 22 of approximately 0.3 mm.

**Fig. 4** shows the part shown in figure 3 before fusion of a part of the distal portion 14 of the rib element 12, i.e., components of the filtration unit 1 before the process step of bonding by partly fusing and/or melting the first and/or second housing part 2, 4.

It may be considered that figure 4 shows a pre-product of the filtration unit 1 shown in figure 3.

Compared to the further processed filtration unit 1 in figure 3, the rib element 12 is higher and the distance between the support surface 18 and/or the filter membrane 6 and the abutting surface 24 is larger. Accordingly, the distance between the vertex 22b of the barrier element 22 and the support surface 18 and/or the filter membrane 6 is equally larger.

Specifically, the part of the distal portion 14 of the rib element 12, which has been fused and/or melted for obtaining the solidified melt 15 for bonding, as shown in figure 3, is still an integral part of the rib element 12 and/or forms a contact surface 16, which contacts and/or abuts upon the abutting surface 24.

The difference in height of the rib element 12 before and after the fusing process defines the volume of material fused from the distal portion 14 of the rib element 12, which substantially corresponds to the volume of solidified melt 15 being received by the inner melt cavity 20 and/or the outer melt cavity 28.

Also, the difference in height of the rib element 12 defines the extend of relative movement between the first housing part 2 and the second housing part 4 towards one another.

In the particular example describe above, the height of the part of the distal portion 14 to be fused is approximately 0.3 mm, which results in a volume of fused material and/or solidified melt of approximately 30 mm³.

Preferably, the barrier element 22 is designed so that it protrudes from the abutting surface 24 to such an extent that it provides a barrier for blocking the fused material and/or stopping the fused material from flowing further towards a central part of the filtration unit 1 but at the same time does not hinder a predefined and/or predefinable relative movement between the housing parts 2, 4 towards one another.

Further preferred, the height of the barrier element 22 substantially equals or is slightly less than the predefined and/or predefinable difference in height of the rib element 12 before and after the fusing process. This way, an effective blockage of the fused material may be achieved.

It is to be noted that if a portion of the filter element 6 is positioned between the vertex 22b of the barrier element 22 and the support surface 18, the height of the barrier element 22 should be reduced approximately by the height and/or thickness of the filter element 6 so that no or at least no excess pressure is exerted onto the filter element 6.

Optionally, the barrier element 22 may comprise a flexible portion, which, when abutting against the filter element 6 and/or the support surface 18 and upon further relative movement between the housing parts 2 ,4 towards one another, is deformed while remaining in abutment to the filter element 6 and/or the support surface 18. This way, an improved blockage of fused material may be achieved already at an early stage of the fusing process without hindering the further relative movement of the housing parts 2, 4. The flexible portion may be provided in addition to a vertex 22b for blocking a relative movement beyond a desired extent.

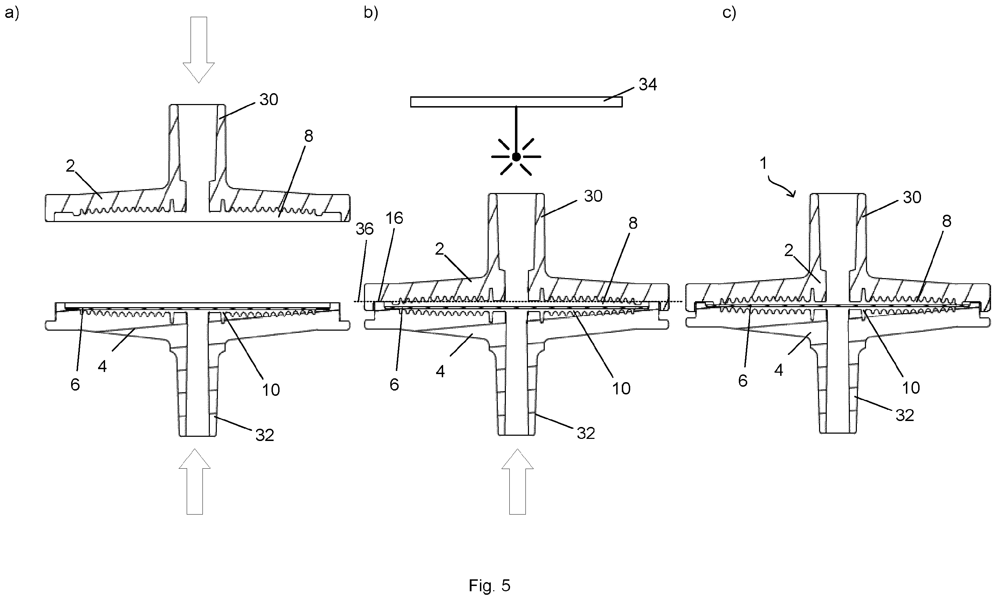

**Fig. 5** shows an exemplary method of manufacturing a filtration unit 1.

The method comprises the step of mounting the first housing part 2 and the second housing part 4 opposed to one another. The method further comprises the step of placing a filter element 6, in the shown example a filter membrane 6, in a fitting provided by the second housing part 4, in particular by the support surface 18 and the rib element 12.

Subsequently, the first housing part 2 and the second housing part 4 are moved substantially transversally towards one another such that the contact surface 16 of the rib element 12 of the second housing part 4 abuts against the abutting surface 24 of the first housing part 2. Preferably, the first housing part 2 and the second housing part 4 arranged substantially concentrically and/or that respective central axes are substantially aligned.

The subsequent fusing process b) may include ultrasonic welding or laser beam welding for fusing at least a part of the distal portion 14 of the rib element 12 in order to obtain an attachment and/or adhesive bond between the first housing part 2 and the second housing part 4 as well as between the filter element 6 and at least the first housing part 2. Accordingly, filter element 6 is attached and/or bonded to the first housing part 2 and, optionally, to the second housing part 4 during the same fusing process or fusing step as bonding the housing parts 2, 4 together.

In the following, a fusing process including laser beam welding is described:

A laser beam welding device 34 is provided, which is configured to apply laser beam irradiation for fusing at least a part of the distal portion 14 of the rib element 12.

Thus, at least the distal portion 14 of the rib element 12, preferably the entire second housing part 4, may comprise or consist of a material, which at least partly absorbs the laser beam produced by the laser beam welding device 34, respectively at least partly absorbs the energy of said laser beam. The absorption concentration and/or ratio may be tuned according to requirements.

In the shown example, the laser beam welding device 34 is arranged so that its laser beam propagates through at least a part of the first housing part 2 before reaching the second housing part 4. Therefore, it is beneficial that the first housing part 2 comprises or consists of a material, which is substantially permeable and/or transparent to the laser beam in order to substantially not absorb the laser beam, respectively energy of the laser beam.

To obtain an efficient fusing of the material of the distal portion 14 of the rib element 12, it is preferred that the focal plane 36 of the laser beam welding device 34, i.e., the plane in which the laser beam has its smallest diameter and/or highest energy per area, is oriented substantially parallel and in a common plane as the contact surface 18 of the rib element 12 and/or the abutting surface 24 of the first housing part 2. This way, the most distal part of the distal portion 14 of the rib element 12 is heated and fused efficiently.

It is preferred that the size of the area covered by the laser beam in the focal plane 36 is equal or larger than the radius of the lateral portion 12b of the rib element 12 and that the area is aligned substantially concentrically with respect to central axes of the housing parts 2, 4. This way, the entire contact surface 16 may be heated and/or fused simultaneously.

Preferably, during the fusing process, the first housing part 2 is held substantially fixed and/or locked in place while the second housing part 4 is continuously pressed against the first housing part 2, preferably in a direction substantially orthogonal to the abutting surface 24 of the first housing part 2. By doing so, the fused material of the rib element 12 is displaced by the exerted pressure and the second housing part 4 is moved towards the first housing part 2.

The fused material originating from the distal portion 14 of the rib element 12 accumulates in the inner melting cavity 20 and, optionally, the outer melting cavity 28.

At the same time, a part of the distal portion 14 of the rib element 12 comprising or consisting of substantially unfused and/or solid material is moved towards the abutting surface 24 and/or forms the contact surface 16 of the rib element 12 in abutment with the abutting surface 24. Preferably, the position of the focal plane 36 of the laser beam is substantially constant so that the movement of the second housing part 4 results in the material of the rib element 12 to be fused being consistently fed to the focal plane 36 in order to be fused by the laser beams.

Consequently, neither the laser beam welding device 34 nor its focal plane 36 are to be moved or adapted during the fusing process, which allows a cost-efficient and simple manufacturing method.

The fusing process is stopped when a predefined and/or predefinable relative position between the first housing part 2 and the second housing part 4 is reached and/or if a predefined and/or predefinable part of the distal portion 14 of the rib element 12 has been fused.

After solidification of the fused material, the first housing part 2 and the second housing part 4 are attached and/or bonded to one another and the filter element 6 is attached and/or bonded to the first housing part 2 and, optionally, the second housing part 4 by the solidified melt 15 originating from the rib element 12.

### List of Reference Numerals

- 1: filtration unit
- 2: first housing part
- 4: second housing part
- 6: filter element, filter membrane
- 8: first fluid chamber
- 10: second fluid chamber
- 12: rib element
- 12a: medial surface of rib element
- 12b: lateral surface of rib element
- 14: distal portion of rib element
- 15: solidified melt
- 16: contact surface
- 18: support surface
- 20: inner melt cavity
- 22: barrier element
- 22a: lateral surface of barrier element
- 22b: vertex of barrier element
- 24: abutting surface
- 26: ridge element
- 26a: medial surface of the ridge element
- 28: outer melt cavity
- 30: first fluid port
- 32: second fluid port
- 34: laser beam welding device
- 36: focal plane

## Claims

1. Filtration unit (1), in particular a syringe attachment filter or syringe filter holder, for filtering of a fluid, the filtration unit (1) comprising:
a first housing part (2) comprising at least one first fluid chamber (8) for a fluid to be filtered;
a second housing part (4) comprising at least one second fluid chamber (10) for a filtered fluid;
a filter element (6) configured to fluidly connect the first fluid chamber (8) and the second fluid chamber (10) and to filter the fluid to be filtered;
wherein the second housing part (4) comprises:
a support surface (18) for supporting a fringe area of the filter element (6); and
a rib element (12) protruding from the support surface (18), at least a distal portion (14) of the rib element (12) consisting of or comprising a material substantially fusible by welding;
wherein the first housing part (2) comprises:
an abutting surface (24) for substantially abutting with the distal portion (14) of the rib element (12), the abutting surface (24) at least partly facing the support surface (18) of the second housing part (4); and
a barrier element (22) protruding from the abutting surface (24) towards the support surface (18) and positioned relative to the rib element (12) so as to laterally enclose an inner melt cavity (20) therebetween, wherein the inner melt cavity (20) upon welding is at least partially filled with solidified melt (15) originating from fused material of the distal portion (14) of the rib element (12),
wherein the first housing part (2) and the filter element (6) and, optionally, the second housing part (4) are coupled to one another via the solidified melt (15) in the inner melt cavity (20).

2. Filtration unit (1) according to claim 1, wherein at least the distal portion (14) of the rib element (12) consists of or comprises a material substantially fusible by laser beam welding and, preferably, the first housing part (2) consist of a material substantially transparent for the laser beams used for fusing of at least the distal portion (14) of the rib element (12).

3. Filtration unit (1) according claim 1 or 2, wherein the barrier element (22) substantially separates the first fluid chamber from the inner melt cavity and/or wherein the filter element is a filter membrane.

4. Filtration unit (1) according to any one of the preceding claims, wherein the barrier element (22) is configured to substantially block the fused material and/or to substantially prohibit the fused material from flowing past the barrier element (22) towards a central or inner part of the filter unit (1); and/or
wherein the inner melt cavity (20) is formed by the rib element (12), the abutting surface (24), the barrier element (22) and the support surface (18) and/or the filter element (6).

5. Filtration unit (1) according to any one of the preceding claims, wherein a fringe area of the filter element (6) is coupled to the first housing part (2) via the solidified melt originating from the fused material; and/or
wherein the barrier element (22) is circumferentially provided at a lateral area of the first housing part (2).

6. Filtration unit (1) according to any one of the preceding claims, wherein the rib element (12) is circumferentially provided at a lateral area of the second housing part (4), preferably at a position further lateral than the barrier element (22).

7. Filtration unit (1) according to any one of the preceding claims, wherein a lateral surface (22a) of the barrier element (22) faces a medial surface of the rib element (12); and, optionally,
wherein a distance between the lateral surface (22a) of the barrier element (22) and the medial surface (12a) of the rib element (12) is approximately 0.5 mm to approximately 3 mm, preferably approximately 0.7 mm to approximately 1 mm.

8. Filtration unit (1) according to any one of the preceding claims, wherein a distance between the abutting surface (24) of the first housing part (2) and the support surface (18) of the second housing part (4) is approximately 0.3 mm to approximately 1.5 mm, preferably approximately 0.4 to approximately 0.8 mm; and/or
wherein a volume of the inner melt cavity (20) is approximately 20 mm³ to approximately 50 mm³, preferably approximately 30 mm³ to approximately 40 mm³.

9. Filtration unit (1) according to any one of the preceding claims, wherein the first housing part (2) comprises at least one first fluid port (30) in fluid connection with the first fluid chamber (8) for receiving the fluid to be filtered; and/or
wherein the second housing part (4) comprises at least one second fluid port (32) in fluid connection with the second fluid chamber (10) for discharging the filtered fluid.

10. Filtration unit (1) according to any one of the preceding claims, wherein the first housing part (2) comprises at least one ridge element (26) protruding from the abutting surface (24) and positioned lateral to the rib element (12), wherein at least one crevice formed between a medial surface (26a) of the ridge element (26) and a lateral surface (12b) of the rib element (12) defines an outer melt cavity (28) and wherein the outer melt cavity (28) is to be at least partially filled with the solidified melt (15) originating from fused material of the distal portion (14) of the rib element (12); and, optionally,
wherein a distance between a medial surface (26a) of the ridge element (26) and a lateral surface (12b) of the rib element (12) is approximately 0.05 mm to approximately 1 mm, preferably approximately 0.1 mm to approximately 0.4 mm.

11. Method of manufacturing a filtration unit (1), in particular a syringe attachment filter or syringe filter holder, the filtration unit (1) comprising a first housing part (2), a second housing part (4) and a filter element (6) supported by the second housing part (4), wherein the second housing part (4) comprises at least one rib element (12) wherein at least a distal portion (14) of the rib element (12) comprising or consist of a material fusible by welding; wherein the first housing part (2) comprises at least one abutting surface (24) for abutting with a contact surface (16) of the distal portion (14) of the rib element (12);
the method comprising the steps of:
arranging the first housing part (2) and the second housing part (4) so that the distal portion (14) of the rib element (12) of the second housing part (4) substantially abuts against the abutting surface (24) of the first housing part (2); and
simultaneously pressing the second housing part (4) and the first housing part (2) together and at least partly fusing the distal portion (14) of the rib element (12) thereby bonding the filter element (6) to the first housing part (2) and, optionally, to the second housing part (4), via a solidified melt (15) originating from the distal portion (14) of the rib element (12) in an inner melt cavity (20).

12. Method of manufacturing a filtration unit (1) according to claim 11, wherein at least the distal portion (14) of the rib element (12) consists of or comprises a material substantially fusible by laser beam welding; and
wherein fusing the distal portion (14) of the rib element (12) includes applying laser beam irradiation, thereby fusing at least a part of the distal portion (14) of the rib element (12); and, preferably, wherein the first housing part (2) comprises or consists of a material substantially transparent/permeable for the laser beams and the laser beams substantially propagate through at least a part of the first housing part (2) before reaching the rib element (12).

13. Method of manufacturing a filtration unit (1) according to claim 11 or 12, wherein a focal plane (36) of the laser beam is approximately orthogonal to the contact surface (16) of the distal portion (14) of the rib element (12) while applying the laser irradiation to the distal portion (14) of the rib element (12); and, preferably, at approximately the same level as the contact surface (16).

14. Method of manufacturing a filtration unit (1) according to any one of claims 11 to 13, wherein the second housing part (4) moves towards the first housing part (2) and/or the focal plane (36) of the laser beam while applying the laser irradiation; or
wherein the first housing part (2) and/or the focal plane (36) of the laser beam move towards the second housing part (4) while applying the laser irradiation.

15. Method of manufacturing a filtration unit (1) according to any one of claims 11 to 14, further comprising the step of stopping the laser irradiation when a predefined and/or predefinable part of the distal portion (14) of the rib element (12) has been fused and/or a predefined and/or predefinable relative position between the first housing part (2) and the second housing part (4) is obtained; and/or
further comprising the step of applying negative pressure to a second fluid chamber (10) of the second housing part (4), thereby pressing the filter element (6) against a support surface (18) of the second housing part (4).

## Patentansprüche

1. Filtrationseinheit (1), insbesondere ein Spritzenaufsatzfilter oder ein Spritzenfilterhalter, zur Filtration eines Fluids, wobei die Filtrationseinheit (1) umfasst:
ein erstes Gehäuseteil (2), das mindestens eine erste Fluidkammer (8) für ein zu filterndes Fluid umfasst;
ein zweites Gehäuseteil (4), das mindestens eine zweite Fluidkammer (10) für ein gefiltertes Fluid umfasst;
ein Filterelement (6), das dazu konfiguriert ist, die erste Fluidkammer (8) und die zweite Fluidkammer (10) fluidisch zu verbinden und das zu filtrierende Fluid zu filtern;
wobei das zweite Gehäuseteil (4) umfasst:
eine Stützfläche (18) zum Abstützen eines Randbereichs des Filterelements (6); und
ein Rippenelement (12), das von der Stützfläche (18) vorsteht, wobei mindestens ein distaler Abschnitt (14) des Rippenelements (12) aus einem Material besteht oder ein Material umfasst, das durch Schweißen im Wesentlichen schmelzbar ist;
wobei das erste Gehäuseteil (2) umfasst:
eine Anlagefläche (24) zum im Wesentlichen Anliegen an dem distalen Abschnitt (14) des Rippenelements (12), wobei die Anlagefläche (24) der Stützfläche (18) des zweiten Gehäuseteils (4) zumindest teilweise zugewandt ist; und
ein Barriereelement (22), das von der Anlagefläche (24) in Richtung der Stützfläche (18) vorsteht und relativ zum Rippenelement (12) so positioniert ist, dass es einen inneren Schmelzhohlraum (20) dazwischen seitlich einschließt, wobei der innere Schmelzhohlraum (20) beim Schweißen zumindest teilweise mit verfestigter Schmelze (15) gefüllt ist, die aus dem geschmolzenen Material des distalen Abschnitts (14) des Rippenelements (12) stammt, wobei das erste Gehäuseteil (2) und das Filterelement (6) und optional das zweite Gehäuseteil (4) über die verfestigte Schmelze (15) in dem inneren Schmelzhohlraum (20) miteinander gekoppelt sind.

2. Filtrationseinheit (1) nach Anspruch 1, wobei mindestens der distale Abschnitt (14) des Rippenelements (12) aus einem Material besteht oder ein Material umfasst, das durch Laserstrahlschweißen im Wesentlichen schmelzbar ist, und vorzugsweise das erste Gehäuseteil (2) aus einem Material besteht, das für die zum Schmelzen mindestens des distalen Abschnitts (14) des Rippenelements (12) verwendeten Laserstrahlen im Wesentlichen transparent ist.

3. Filtrationseinheit (1) nach Anspruch 1 oder 2, wobei das Barriereelement (22) die erste Fluidkammer im Wesentlichen von dem inneren Schmelzhohlraum trennt und/oder wobei das Filterelement eine Filtermembran ist.

4. Filtrationseinheit (1) nach einem der vorangehenden Ansprüche, wobei das Barriereelement (22) dazu konfiguriert ist, das geschmolzene Material im Wesentlichen zu blockieren und/oder das geschmolzene Material im Wesentlichen daran zu hindern, das Barriereelement (22) in Richtung eines zentralen oder inneren Teils der Filtrationseinheit (1) zu passieren; und/oder
wobei der innere Schmelzhohlraum (20) durch das Rippenelement (12), die Anlagefläche (24), das Barriereelement (22) und die Stützfläche (18) und/oder das Filterelement (6) gebildet wird.

5. Filtrationseinheit (1) nach einem der vorangehenden Ansprüche, wobei ein Randbereich des Filterelements (6) über die aus dem geschmolzenen Material stammende verfestigte Schmelze mit dem ersten Gehäuseteil (2) gekoppelt ist; und/oder
wobei das Barriereelement (22) umfänglich in einem seitlichen Bereich des ersten Gehäuseteils (2) vorgesehen ist.

6. Filtrationseinheit (1) nach einem der vorangehenden Ansprüche, wobei das Rippenelement (12) umfänglich in einem seitlichen Bereich des zweiten Gehäuseteils (4) vorgesehen ist, vorzugsweise an einer Position, die seitlicher ist als das Barriereelement (22).

7. Filtrationseinheit (1) nach einem der vorangehenden Ansprüche, wobei eine seitliche Fläche (22a) des Barriereenelements (22) einer medialen Fläche des Rippenelements (12) zugewandt ist; und optional,
wobei ein Abstand zwischen der seitlichen Fläche (22a) des Barriereenelements (22) und der medialen Fläche (12a) des Rippenelements (12) etwa 0,5 mm bis etwa 3 mm beträgt, vorzugsweise etwa 0,7 mm bis etwa 1 mm.

8. Filtrationseinheit (1) nach einem der vorangehenden Ansprüche, wobei ein Abstand zwischen der Anlagefläche (24) des ersten Gehäuseteils (2) und der Stützfläche (18) des zweiten Gehäuseteils (4) etwa 0,3 mm bis etwa 1,5 mm beträgt, vorzugsweise etwa 0,4 mm bis etwa 0,8 mm; und/oder
wobei ein Volumen des inneren Schmelzhohlraums (20) etwa 20 mm³ bis etwa 50 mm³ beträgt, vorzugsweise etwa 30 mm³ bis etwa 40 mm³.

9. Filtrationseinheit (1) nach einem der vorangehenden Ansprüche, wobei das erste Gehäuseteil (2) mindestens einen ersten Fluidanschluss (30) in Fluidverbindung mit der ersten Fluidkammer (8) zum Aufnehmen des zu filternden Fluids umfasst; und/oder
wobei das zweite Gehäuseteil (4) mindestens einen zweiten Fluidanschluss (32) in Fluidverbindung mit der zweiten Fluidkammer (10) zum Abführen des gefilterten Fluids umfasst.

10. Filtrationseinheit (1) nach einem der vorangehenden Ansprüche, wobei das erste Gehäuseteil (2) mindestens ein Gratelement (26) umfasst, das von der Anlagefläche (24) vorsteht und seitlich zum Rippenelement (12) positioniert ist, wobei mindestens ein Spalt, der zwischen einer medialen Fläche (26a) des Gratelements (26) und einer seitlichen Fläche (12b) des Rippenelements (12) gebildet wird, einen äußeren Schmelzhohlraum (28) definiert, und wobei der äußere Schmelzhohlraum (28) zumindest teilweise mit der verfestigten Schmelze (15) gefüllt werden soll, die aus dem geschmolzenen Material des distalen Abschnitts (14) des Rippenelements (12) stammt; und optional,
wobei ein Abstand zwischen einer medialen Fläche (26a) des Gratelements (26) und einer seitlichen Fläche (12b) des Rippenelements (12) etwa 0,05 mm bis etwa 1 mm beträgt, vorzugsweise etwa 0,1 mm bis etwa 0,4 mm.

11. Verfahren zur Herstellung einer Filtrationseinheit (1), insbesondere eines Spritzenaufsatzfilters oder eines Spritzenfilterhalters, wobei die Filtrationseinheit (1) ein erstes Gehäuseteil (2), ein zweites Gehäuseteil (4) und ein vom zweiten Gehäuseteil (4) gestütztes Filterelement (6) umfasst, wobei das zweite Gehäuseteil (4) mindestens ein Rippenelement (12) umfasst, wobei mindestens ein distaler Abschnitt (14) des Rippenelements (12) ein durch Schweißen schmelzbares Material umfasst oder daraus besteht; wobei das erste Gehäuseteil (2) mindestens eine Anlagefläche (24) zum Anliegen an einer Kontaktfläche (16) des distalen Abschnitts (14) des Rippenelements (12) umfasst;
das Verfahren umfassend die Schritte des:
Anordnens des ersten Gehäuseteils (2) und des zweiten Gehäuseteils (4) derart, dass der distale Abschnitt (14) des Rippenelements (12) des zweiten Gehäuseteils (4) im Wesentlichen gegen die Anlagefläche (24) des ersten Gehäuseteils (2) anliegt; und
gleichzeitigen Zusammenpressens des zweiten Gehäuseteils (4) und des ersten Gehäuseteils (2) und zumindest teilweisen Schmelzens des distalen Abschnitts (14) des Rippenelements (12), wodurch das Filterelement (6) an das erste Gehäuseteil (2) und optional an das zweite Gehäuseteil (4) über eine verfestigte Schmelze (15) gebunden wird, die aus dem distalen Abschnitt (14) des Rippenelements (12) in einem inneren Schmelzhohlraum (20) stammt.

12. Verfahren zur Herstellung einer Filtrationseinheit (1) nach Anspruch 11, wobei mindestens der distale Abschnitt (14) des Rippenelements (12) aus einem Material besteht oder ein Material umfasst, das durch Laserstrahlschweißen im Wesentlichen schmelzbar ist; und
wobei das Schmelzen des distalen Abschnitts (14) des Rippenelements (12) die Anwendung von Laserstrahlbestrahlung umfasst, wodurch mindestens ein Teil des distalen Abschnitts (14) des Rippenelements (12) geschmolzen wird; und vorzugsweise, wobei das erste Gehäuseteil (2) ein Material umfasst oder daraus besteht, das für die Laserstrahlen im Wesentlichen transparent/durchlässig ist, und die Laserstrahlen sich im Wesentlichen durch mindestens einen Teil des ersten Gehäuseteils (2) ausbreiten, bevor sie das Rippenelement (12) erreichen.

13. Verfahren zur Herstellung einer Filtrationseinheit (1) nach Anspruch 11 oder 12, wobei eine Fokalebene (36) des Laserstrahls bei der Anwendung der Laserbestrahlung auf den distalen Abschnitt (14) des Rippenelements (12) zur Kontaktfläche (16) des distalen Abschnitts (14) des Rippenelements (12) annähernd orthogonal ist; und vorzugsweise annähernd auf demselben Niveau wie die Kontaktfläche (16).

14. Verfahren zur Herstellung einer Filtrationseinheit (1) nach einem der Ansprüche 11 bis 13, wobei sich das zweite Gehäuseteil (4) während der Anwendung der Laserbestrahlung in Richtung des ersten Gehäuseteils (2) und/oder der Fokalebene (36) des Laserstrahls bewegt; oder
wobei sich das erste Gehäuseteil (2) und/oder die Fokalebene (36) des Laserstrahls während der Anwendung der Laserbestrahlung in Richtung des zweiten Gehäuseteils (4) bewegen.

15. Verfahren zur Herstellung einer Filtrationseinheit (1) nach einem der Ansprüche 11 bis 14, ferner umfassend den Schritt des Stoppens der Laserbestrahlung, wenn ein vorbestimmter und/oder vorbestimmbarer Teil des distalen Abschnitts (14) des Rippenelements (12) geschmolzen wurde und/oder wenn eine vorbestimmte und/oder vorbestimmbare Relativposition zwischen dem ersten Gehäuseteil (2) und dem zweiten Gehäuseteil (4) erreicht ist; und/oder
ferner umfassend den Schritt des Anlegens eines Unterdrucks an eine zweite Fluidkammer (10) des zweiten Gehäuseteils (4), wodurch das Filterelement (6) gegen eine Stützfläche (18) des zweiten Gehäuseteils (4) gedrückt wird.

## Revendications

1. Unité de filtration (1), en particulier un filtre à fixation sur seringue ou un porte-filtre pour seringue, pour la filtration d'un fluide, l'unité de filtration (1) comprenant :
une première partie de boîtier (2) comprenant au moins une première chambre à fluide (8) pour un fluide à filtrer ;
une deuxième partie de boîtier (4) comprenant au moins une deuxième chambre à fluide (10) pour un fluide filtré ;
un élément filtrant (6) configuré pour relier fluidiquement la première chambre à fluide (8) et la deuxième chambre à fluide (10) et pour filtrer le fluide à filtrer ;
où la deuxième partie de boîtier (4) comprend :
une surface d'appui (18) pour supporter une zone de bordure de l'élément filtrant (6) ; et
un élément nervure (12) faisant saillie depuis la surface d'appui (18), au moins une partie distale (14) de l'élément nervure (12) étant constituée d'un matériau ou comprenant un matériau substantiellement fusible par soudage ;
où la première partie de boîtier (2) comprend :
une surface de butée (24) pour venir sensiblement en butée avec la partie distale (14) de l'élément nervure (12), la surface de butée (24) faisant au moins partiellement face à la surface d'appui (18) de la deuxième partie de boîtier (4) ; et
un élément barrière (22) faisant saillie depuis la surface de butée (24) vers la surface d'appui (18) et positionné par rapport à l'élément nervure (12) de manière à enfermer latéralement entre eux une cavité de fusion interne (20), où la cavité de fusion interne (20) est, lors du soudage, au moins partiellement remplie de matière fondue solidifiée (15) provenant du matériau fusionné de la partie distale (14) de l'élément nervure (12), où la première partie de boîtier (2) et l'élément filtrant (6) et, optionnellement, la deuxième partie de boîtier (4) sont couplés l'un à l'autre par la matière fondue solidifiée (15) dans la cavité de fusion interne (20).

2. Unité de filtration (1) selon la revendication 1, où au moins la partie distale (14) de l'élément nervure (12) est constituée d'un matériau ou comprend un matériau substantiellement fusible par soudage au faisceau laser et, de préférence, la première partie de boîtier (2) est constituée d'un matériau substantiellement transparent pour les faisceaux laser utilisés pour la fusion d'au moins la partie distale (14) de l'élément nervure (12).

3. Unité de filtration (1) selon la revendication 1 ou 2, où l'élément barrière (22) sépare sensiblement la première chambre à fluide de la cavité de fusion interne et/ou où l'élément filtrant est une membrane filtrante.

4. Unité de filtration (1) selon l'une quelconque des revendications précédentes, où l'élément barrière (22) est configuré pour bloquer sensiblement le matériau fusionné et/ou pour empêcher sensiblement le matériau fusionné de s'écouler au-delà de l'élément barrière (22) vers une partie centrale ou intérieure de l'unité de filtration (1) ; et/ou
où la cavité de fusion interne (20) est formée par l'élément nervure (12), la surface de butée (24), l'élément barrière (22) et la surface d'appui (18) et/ou l'élément filtrant (6).

5. Unité de filtration (1) selon l'une quelconque des revendications précédentes, où une zone de bordure de l'élément filtrant (6) est couplée à la première partie de boîtier (2) par la matière fondue solidifiée provenant du matériau fusionné ; et/ou
où l'élément barrière (22) est fourni de manière circonférentielle dans une zone latérale de la première partie de boîtier (2).

6. Unité de filtration (1) selon l'une quelconque des revendications précédentes, où l'élément nervure (12) est fourni de manière circonférentielle dans une zone latérale de la deuxième partie de boîtier (4), de préférence à une position plus latérale que l'élément barrière (22).

7. Unité de filtration (1) selon l'une quelconque des revendications précédentes, où une surface latérale (22a) de l'élément barrière (22) fait face à une surface médiale de l'élément nervure (12) ; et, optionnellement,
où une distance entre la surface latérale (22a) de l'élément barrière (22) et la surface médiale (12a) de l'élément nervure (12) est d'environ 0,5 mm à environ 3 mm, de préférence d'environ 0,7 mm à environ 1 mm.

8. Unité de filtration (1) selon l'une quelconque des revendications précédentes, où une distance entre la surface de butée (24) de la première partie de boîtier (2) et la surface d'appui (18) de la deuxième partie de boîtier (4) est d'environ 0,3 mm à environ 1,5 mm, de préférence d'environ 0,4 mm à environ 0,8 mm ; et/ou
où un volume de la cavité de fusion interne (20) est d'environ 20 mm³ à environ 50 mm³, de préférence d'environ 30 mm³ à environ 40 mm³.

9. Unité de filtration (1) selon l'une quelconque des revendications précédentes, où la première partie de boîtier (2) comprend au moins un premier orifice à fluide (30) en communication fluidique avec la première chambre à fluide (8) pour recevoir le fluide à filtrer ; et/ou
où la deuxième partie de boîtier (4) comprend au moins un deuxième orifice à fluide (32) en communication fluidique avec la deuxième chambre à fluide (10) pour évacuer le fluide filtré.

10. Unité de filtration (1) selon l'une quelconque des revendications précédentes, où la première partie de boîtier (2) comprend au moins un élément de crête (26) faisant saillie depuis la surface de butée (24) et positionné latéralement par rapport à l'élément nervure (12), où au moins une fissure formée entre une surface médiale (26a) de l'élément de crête (26) et une surface latérale (12b) de l'élément nervure (12) définit une cavité de fusion externe (28) et où la cavité de fusion externe (28) doit être au moins partiellement remplie de la matière fondue solidifiée (15) provenant du matériau fusionné de la partie distale (14) de l'élément nervure (12) ; et, optionnellement,
où une distance entre une surface médiale (26a) de l'élément de crête (26) et une surface latérale (12b) de l'élément nervure (12) est d'environ 0,05 mm à environ 1 mm, de préférence d'environ 0,1 mm à environ 0,4 mm.

11. Procédé de fabrication d'une unité de filtration (1), en particulier un filtre à fixation sur seringue ou un porte-filtre pour seringue, l'unité de filtration (1) comprenant une première partie de boîtier (2), une deuxième partie de boîtier (4) et un élément filtrant (6) supporté par la deuxième partie de boîtier (4), où la deuxième partie de boîtier (4) comprend au moins un élément nervure (12) où au moins une partie distale (14) de l'élément nervure (12) comprenant ou étant constituée d'un matériau fusible par soudage ; où la première partie de boîtier (2) comprend au moins une surface de butée (24) pour venir en butée avec une surface de contact (16) de la partie distale (14) de l'élément nervure (12) ;
le procédé comprenant les étapes de :
agencer la première partie de boîtier (2) et la deuxième partie de boîtier (4) de sorte que la partie distale (14) de l'élément nervure (12) de la deuxième partie de boîtier (4) vienne sensiblement en butée contre la surface de butée (24) de la première partie de boîtier (2) ; et
simultanément presser la deuxième partie de boîtier (4) et la première partie de boîtier (2) ensemble et fusionner au moins partiellement la partie distale (14) de l'élément nervure (12), liant ainsi l'élément filtrant (6) à la première partie de boîtier (2) et, optionnellement, à la deuxième partie de boîtier (4), par une matière fondue solidifiée (15) provenant de la partie distale (14) de l'élément nervure (12) dans une cavité de fusion interne (20).

12. Procédé de fabrication d'une unité de filtration (1) selon la revendication 11, où au moins la partie distale (14) de l'élément nervure (12) est constituée d'un matériau ou comprend un matériau substantiellement fusible par soudage au faisceau laser ; et où la fusion de la partie distale (14) de l'élément nervure (12) comprend l'application d'une irradiation par faisceau laser, fusionnant ainsi au moins une partie de la partie distale (14) de l'élément nervure (12) ; et, de préférence, où la première partie de boîtier (2) comprend ou est constituée d'un matériau substantiellement transparent/perméable pour les faisceaux laser et les faisceaux laser se propagent substantiellement à travers au moins une partie de la première partie de boîtier (2) avant d'atteindre l'élément nervure (12).

13. Procédé de fabrication d'une unité de filtration (1) selon la revendication 11 ou 12, où un plan focal (36) du faisceau laser est approximativement orthogonal à la surface de contact (16) de la partie distale (14) de l'élément nervure (12) lors de l'application de l'irradiation laser à la partie distale (14) de l'élément nervure (12) ; et, de préférence, approximativement au même niveau que la surface de contact (16).

14. Procédé de fabrication d'une unité de filtration (1) selon l'une quelconque des revendications 11 à 13, où la deuxième partie de boîtier (4) se déplace vers la première partie de boîtier (2) et/ou vers le plan focal (36) du faisceau laser lors de l'application de l'irradiation laser ; ou
où la première partie de boîtier (2) et/ou le plan focal (36) du faisceau laser se déplacent vers la deuxième partie de boîtier (4) lors de l'application de l'irradiation laser.

15. Procédé de fabrication d'une unité de filtration (1) selon l'une quelconque des revendications 11 à 14, comprenant en outre l'étape consistant à arrêter l'irradiation laser lorsqu'une partie prédéfinie et/ou prédéfinissable de la partie distale (14) de l'élément nervure (12) a été fusionnée et/ou lorsqu'une position relative prédéfinie et/ou prédéfinissable entre la première partie de boîtier (2) et la deuxième partie de boîtier (4) est obtenue ; et/ou
comprenant en outre l'étape consistant à appliquer une pression négative à une deuxième chambre à fluide (10) de la deuxième partie de boîtier (4), pressant ainsi l'élément filtrant (6) contre une surface d'appui (18) de la deuxième partie de boîtier (4).
